# EUROPEAN PATENT APPLICATION

(11) **EP 1 134 825 A2**
(43) Date of publication of application: **19.09.2001**
(21) Application number: 01105813.8
(22) Date of filing: 08.03.2001
(51) Int. Cl.: H01M 4/50

(54) **Non-aqueous electrolyte cell**

(30) Priority: 17.03.2000 JP 2000081858
(71) Applicant: SONY CORPORATION, Tokyo (JP)
(72) Inventor: Yamaura, Kiyoshi, Shinagawa-ku, Tokyo (JP)
(74) Representative: MÜLLER & HOFFMANN Patentanwälte

(57) **Abstract**

A non-aqueous electrolyte cell in which structural changes of the positive electrode active material are suppressed to increase the capacity further. The non-aqueous electrolyte cell includes a positive electrode containing a lithium-transition metal compound oxide as a positive electrode active material, a negative electrode containing a carbon compound or metal lithium as a negative electrode active material and a non-aqueous electrolyte interposed between said positive and negative electrodes. The lithium-transition metal compound oxide is represented by the general formula LiₓMnO₂ or LiₓMn_{1-y}Al_{y}O₂ where 0.94 ≤ x ≤ 0.96 and 0.06 ≤ y ≤ 0.25.

## Description

### BACKGROUND OF THE INVENTION

### Field of the Invention

This invention relates to a non-aqueous electrolyte cell exploiting a lithium-transition metal compound oxide as a positive electrode active material.

### Description of Related Art

With the remarkable progress in the field of variegated electronic equipment in recent years, researches are now going on in the field of a rechargeable secondary cell as a power source usable conveniently and economically for prolonged time. Among known representative secondary cells, there are a lead storage cell, an alkali storage cell and a lithium secondary cell. In particular, the lithium secondary cell has various advantages, such as high output or high energy density. The lithium secondary cell is made up of a positive electrode, a negative electrode and a non-aqueous electrolyte that can be reversibly doped/undoped with lithium ions.

Although the tendency is towards a higher capacity of the lithium secondary cell, selection of materials for cost lowering is also proceeding briskly. In particular, since cobalt oxides, so far used for the positive electrode, is more costly than other metal oxides, such as oxides of nickel, manganese or iron, so that substitution of a less costly metal oxide for the cobalt oxide has been a desideratum. In particular, the use of a manganese oxide, as the oxide of one of the most inexpensive transition metals, for the positive electrode, has been a desideratum. Among these manganese oxides, a spinel compound LiMn₂O₄, is one of the most well-known compounds. However, the theoretical capacity of this compound is lower than 150 mAh/g, which is below 274 mAh/g of LiCoO₂. The reason is that, while Li of LiCoO₂ has the number of atoms equal to that of the transition metal in the formula, the number of Li atoms in NiMnO₄ is only one half that of the transition metal in the formula.

Thus, researches into LiMnO₂, having the theoretical capacity rivalling that of LiCoO₂, are conducted briskly as a candidate of the manganese-containing positive electrode active material. According to the results of early investigations, reports were made of high temperature LiMnO₂ and low temperature LiMnO₂.

The high temperature LiMnO₂ was first reported by W.D. Johnston et al. (J. Am. Chem. Soc., 78,325 (1956)) and its structure was determined by R. Hoppe, G. Brachtel and M. Jansen (Z. Anorg. Allg. Chemie, 417.1(1975)). The high temperature LiMnO₂ was first reported by T. Ozuki, A. Ueda and T. Hirai (Chem. Express. Vol.7, No.3, 193 (1992)).

Both the high temperature LiMnO₂ and low temperature LiMnO₂ are of a structure including an orthorombic lattice and which features a spatial group Pmnm. The theoretical capacity of the high temperature LiMnO₂ and low temperature LiMnO₂, which is on the order of 300 mAh/g, cannot be realized if the charging/discharging condition used in the current non-aqueous electrolyte cell is used.

Specifically, the charging capacity of the high temperature LiMnO₂ and that of the low temperature LiMnO₂ are said to be 150 mAh/g and 200 mAh/g, respectively. As for the discharging capacity, the above-mentioned publications indicate that it is not higher than 50 mAh/g for the high temperature LiMnO₂ (2/0V ≥ V (Li/Li⁺)) and is 190 mAh/g for the low temperature LiMnO₂ (2/0V ≥ V (Li/Li⁺)).

However, these values are those reported for a current density nor higher than 100 µA/cm². For practical application, the capacity for the current density not lower than 500 µm is required. If used under the current density corresponding to a high load, the discharge capacity of the high temperature LiMnO₂ and that of the low temperature LiMnO₂ are lowered to approximately 40 mAh/g and to 120 mAh/g, respectively.

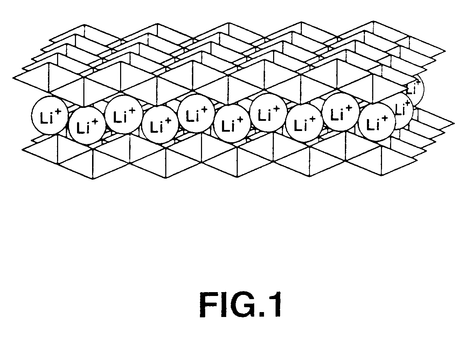

This may possibly be attributed to the following two reasons. The first reason is that both oxides are made up of layered Mn-O sheets and Li intruded into neighboring layers of the Mn-O sheets, as shown in Fig.1. However, in this crystal structure, the Li diffusion path is zigzag-shaped, such that speedy diffusion of Li cannot be achieved. The second reason is that, while the temperature LiMnO₂ is of high crystallinity and is low in electronic resistance due to flaws caused by impurity, the low temperature LiMnO₂ is low in crystallinity and hence is high in impurity resistance. Thus, the low temperature LiMnO₂ shows significant IR drop under a high load, that is at a high current density, so that it suffers significant energy losses. In light of the above, there is a demand raised for LiMnO₂ having a flat layered structure characterized by fast Li diffusion and a high crystallinity.

In 1996, Armstrong et al., synthesized LiMnO₂ having spatial symmetry of C2/m by ion substitution of Na in NaMnO₂ (A.R. Armstrong et al., Nature, 381,499 (1996)). This is the first report on LiMnO₂ having a flat layered structure. In 1998, a report was made that a structure similar to that of LiMnO₂ reported by Armstrong et al., can be obtained by a composition of LiMn_{0.75}Al_{0.25}O₂ by synthesis under controlling the oxygen partial pressure (Y. Young et al., Electrochemical and Solid-State Letters, 1, (1)12(1998)). The compound reported here is synthesized at an elevated temperature and hence is of high crystallinity, such that, with this compound, the storage capacity of the cell employing the positive electrode active material formed of this compound is thought to be increased under a high load due to a flat Li diffusion path.

It has however been found that LiMnO₂ as described above undergoes structural changes in the charging process (spinelling) to lower the discharge capacity. In particular, LiMnO₂ as proposed by Armstrong et al., undergoes marked structural changes in the charging process and has only a small discharging capacity.

On the other hand, LMn_{0.75}Al_{0.25}O₂ is felt to be less thermodynamically unstable than LiMnO₂ and is less susceptible to the above-mentioned structural changes than LiMnO₂ However, solid solution of electrochemically inert Al is accompanied by a similarly small capacity.

In light of the above, it has also been proposed to limit the amount of the solid solution of Al to reduce the structural changes for thereby increasing the capacity. However, this proposal is not up to the recent demand for a higher cell capacity.

### SUMMARY OF THE INVENTION

It is therefore an object of the present invention to provide a non-aqueous electrolyte cell in which the capacity is increased further by suppressing the structural changes of the positive electrode active material.

The present invention provides a non-aqueous electrolyte cell in which structural changes of the positive electrode active material are suppressed to increase the capacity further.

The non-aqueous electrolyte cell according to the present invention includes a positive electrode containing a lithium-transition metal compound oxide as a positive electrode active material, a negative electrode containing a carbon compound or metal lithium as a negative electrode active material, and a non-aqueous electrolyte interposed between said positive and negative electrodes. The lithium-transition metal compound oxide is represented by the general formula LiₓMnO₂ or LiₓMn_{1-y}Al_{y}O₂ with 0.94 ≤ x ≤ 0.96 and 0.06 ≤ y ≤ 0.25.

In this non-aqueous electrolyte cell of the present invention, including a lithium-transition metal compound oxide represented by the general formula LiₓMnO₂ or LiₓMn_{1-y}Al_{y}O₂ where 0.94 ≤ x ≤ 0.96 and 0.06 ≤ y ≤ 0.25, as a positive electrode active material, diffusion of lithium ions is accelerated, while the lithium content ratio is lesser than that in the conventional cell, thereby suppressing changes in structure. Moreover, by prescribing the value of y in LiₓMn_{1-y}Al_{y}O₂, it is possible to prevent the lowering in the electrically conductivity from being decreased and to improve thermal stability of the crystalline structure simultaneously.

According to the present invention, a lithium-transition metal compound oxide represented by the general formula LiₓMnO₂ or LiₓMn_{1-y}Al_{y}O₂ where 0.94 ≤ x ≤ 0.96 and 0.06 ≤ y ≤ 0.25, with the lithium content x being lower than in the conventional cell, is used as a positive electrode active material, whereby the lowering in capacity ascribable to the collapsing of the crystalline structure of the positive electrode active material may be suppressed to realize the high capacity of the non-aqueous electrolyte cell.

### BRIEF DESCRIPTION OF THE DRAWINGS

Fig.1 shows the configuration of the crystal structure of orthorombic LiMnO₂used in a conventional cell as a positive electrode active material.

Fig.2 is a cross-sectional view showing an illustrative structure of a non-aqueous electrolyte cell according to the present invention.

Fig.3 shows the configuration ofthe crystal structure, represented as the spatial group C2/m, of LiMn_{1-y}Al_{y}O₂, used as a positive electrode active material in the inventive cell.

Fig.4 is a graph showing the relation between the values of x and the discharging capacity of a cell produced in the Example and in the Comparative Examples.

Fig.5 shows changes in the crystal structure, as analyzed by X-ray diffraction, of the positive electrode active material prepared in the Comparative Example 1.

### DESCRIPTION OF THE PREFERRED EMBODIMENTS

Referring to the drawings, preferred embodiments of according to the present invention will be explained in detail.

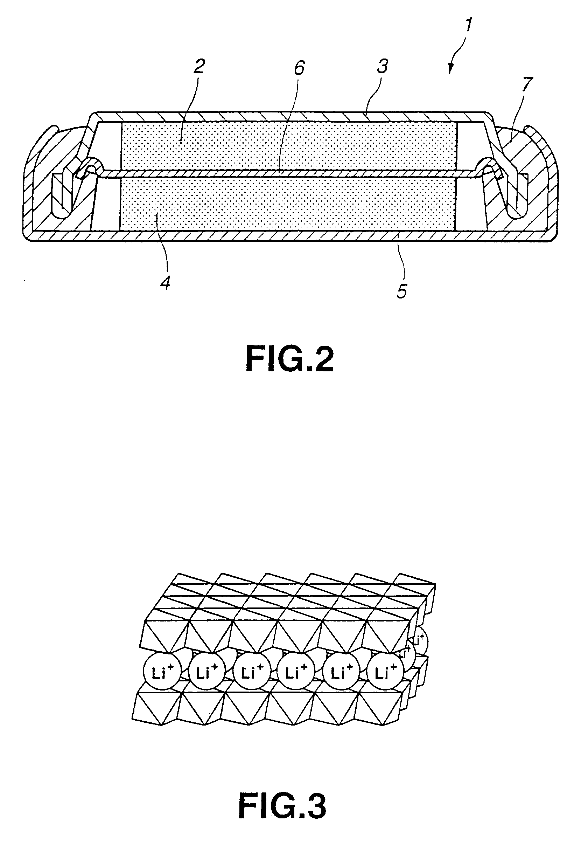

Fig.2 shows an illustrative structure of a non-aqueous electrolyte cell according to an embodiment of the present invention. This non-aqueous electrolyte cell 1 includes a negative electrode 2, a negative electrode can 3, accommodating the negative electrode 2 therein, a positive electrode 4, a positive electrode can 5, a separator 6 arranged between the positive electrode 4 and the negative electrode 2, and an insulating gasket 7, with a non-aqueous electrolytic solution being charged into the negative electrode can 3 and in the positive electrode can 5.

The negative electrode 2 is a foil of e.g., metal lithium, which proves a negative electrode active material. If a material capable of doping/undoping lithium is used as the negative electrode active material, the negative electrode 2 is a layer of the negative electrode active material containing the negative electrode active material and which is deposited on a negative electrode current collector. As the negative electrode current collector, a nickel foil, for example, is used. In constructing a lithium ion cell, a foil of metal lithium may be used as the negative electrode 2.

As the negative electrode active material, capable of doing/undoping lithium, metal lithium, a lithium alloy, an electrically conductive high molecular material, doped with lithium, or a layered compound of, for example, a carbon material or a metal oxide, is used.

As a binder contained in the layer of the negative electrode active material, any suitable known resin material, routinely used as a binder for the negative electrode active material for this sort of the non-aqueous electrolyte cell, may be used.

The negative electrode can 3 is used for holding the negative electrode 2 and also serves as an external negative electrode for the non-aqueous electrolyte cell.

The positive electrode 4 is a positive electrode current collector on which is formed a layer of a positive electrode active material containing a positive electrode active material and a binder. As the positive electrode current collector, an aluminum foil, for example, is used.

In the non-aqueous electrolyte cell 1 of the present embodiment, a lithium-transition metal compound oxide, represented by the general formula LixMnO₂ or LiₓMn_{1-y}Al_{y}O₂, where 0.94 ≤ x ≤ 0.96 and 0.06 ≤ y < 0.25, is used as a positive electrode active material.

By reducing the lithium ratio x in the lithium-transition metal compound oxide to a value such that 0.94 ≤ x ≤ 0.96 smaller than the customary value of x = 1.0, it is possible to suppress volumetric decrease resulting from the collapsed crystal structure to increase the capacity of the non-aqueous electrolyte cell 1 employing the oxide as the positive electrode active material. Although the capacity is limited to that at a high current density of 500 µm/cm², similar results can be obtained at a current density higher than this value.

If Al is substituted for a portion of Mn in LiMnO₂ and Al is solid-dissolved therein to give LiₓMn_{1-y}Al_{y}O₂, the crystalline structure during the charging process may be improved in thermal stability. It may be surmised that, by improving thermal stability of the crystalline structure during the charging process, the spinel transition during the charging process may be suppressed to increase the discharging capacity.

If Al is solid-dissolved in LiₓMnO₂, a layered compound having a structure different from the zig-zag structure, so far reported in LiₓMnO₂, is produced. However, it is not possible in this compound to suppress structural collapsing in the course of the charging and resulting decrease in capacity, noticed in common in the LiMnO₂ based positive electrode, as reported conventionally, cannot be suppressed.

It has been found that, by setting the lithium ratio x (=Li/(Mn+Al)) to a pre-set range of 0.94 ≤ x ≤ 0.96 as described above, the aforementioned structural collapsing may be suppressed in the lithium-transition metal compound oxide synthesized. The reason may possibly such that the thermal instability fort the lithium ratio of x = 1.0 is suppressed by the spinel domain generated by the technique of the present invention.

If the value of y in LiₓMn_{1-y}Al_{y}O₂ is such that y < 0.06, comprised within the range of 0.06 ≤ y < 0.25, the effect of improving the thermal stability of the crystalline structure of the oxide, as described above, is not enough. On the other hand, if y ≥ 0.25, the proportion of electrochemically inert Al is increased to lower the electrically conductivity to promote polarization of LiₓMn_{1-y}Al_{y}O₂ to lower the capacity. Moreover, if the proportion of Al is increased, the amount of Mn or Mn-O linkage, taking part in the oxidation/reduction, is simultaneously decreased. So, by setting the value of y such that 0.06 ≤ y < 0.25, it is possible to improve the thermal stability of the crystalline structure to increase the discharging capacity.

In addition, the LiₓMnO₂ or LiₓMn_{1-y}Al_{y}O₂ has a crystalline structure represented by the spatial group C2/m. The crystalline structure, represented by the spatial group C2/m, has such a configuration in which planar sheets composed e.g., of Mn-O are layered one on others and in which Li is intruded into the space between neighboring layers of the Mn-O sheets, as shown in Fig.3. In such layered structure, the lithium ion diffusion paths are two-dimensional to permit diffusion of lithium ions efficiently and expeditiously.

As the binder for the positive electrode mixture, any suitable known binders, routinely used for the positive electrode mixture of this sort of cell, may be used. In addition, any known suitable additives may be added to the positive electrode mixture.

The positive electrode can 5 accommodates the positive electrode 4 and serves as an external positive electrode of the non-aqueous electrolyte cell 1.

The separator 6, used for separating the positive electrode 4 and the negative electrode 2 from each other, may be formed of any suitable known material routinely used as a separator of this sort of cell. For example, a high molecular film of polypropylene, for example, may be used.

An insulating gasket 7 is assembled and unified in the negative electrode can 3. The insulating gasket 7 serves for prohibiting leakage of the non-aqueous electrolytic solution charged into the negative electrode can 3 and into the positive electrode can 5.

The non-aqueous electrolytic solution is prepared by dissolving an electrolyte in a non-aqueous solvent.

For the electrolyte, any suitable known electrolyte, routinely used for the electrolytic solution for this sort of cell, may be used. Examples of the electrolyte include lithium salts, such as LiClO₄, LiAsF₆, LiPF₆, LiBF₄, LiB(C₆H₅)₄, CH₃SO₃Li, CF₃SO₃Li, LiCl and LiBr.

As the non-aqueous solvent, a variety of non-aqueous solvents, routinely used for the non-aqueous electrolytic solution, may be used. Examples of the non-aqueous solvent include propylene carbonate, ethylene carbonate, dimethyl carbonate, diethyl carbonate, 1, 2-dimethoxyethane, 1, 2-diethoxyethane, γ-butyrolactone, tetrahydrofuran, 2-methyl tetrahydrofuran, 1, 3-dioxolane, 4-methyl-1, 3-dioxolan, 4-methyl-1, 3-dioxolan, diethyl ether, sulforane, methyl supforane, acetonitrile, propionitrile, anisole, acetic acid ester, lactic acid ester and propionic acid ester. These non-aqueous solvents ma be used singly or in combination.

The above-described non-aqueous electrolyte cell 1 uses a lithium-transition metal compound oxide, represented by the general formula of LiₓMnO₂ or LiₓMn₁₋ _{y}Al_{y}O₂, with 0.94 ≤ x ≤ 0.96 and 0.06 ≤ y <0.25, as a positive electrode active material. With this lithium-transition metal compound oxide, the lithium content ratio x is such that 0.94 ≤ x ≤ 0.96, with the lithium content ratio x being lower than a conventional value of x = 1, thus suppressing collapsing of the crystalline structure. So, this non-aqueous electrolyte cell 1 is of a high capacity due to suppression of the lowering in the capacity ascribable to the collapsing of the crystalline structure of the positive electrode active material.

The above-described non-aqueous electrolyte cell 1 is prepared by the following process:

For producing the negative electrode 2, the negative electrode active material and the binder are dispersed in a solvent to prepare a slurried negative electrode mixture. The so-produced negative electrode mixture then is coated evenly on a current collector and dried in situ to form a layer of a negative electrode active material to complete the negative electrode 2. As the binder for the negative electrode mixture, any suitable known binder may be used. In addition, the negative electrode mixture may be admixed with known additives. In preparing a lithium ion cell, a foil of metal lithium may be used as a negative electrode 2.

The positive electrode 4 may be prepared by coating a positive electrode mixture containing both a positive electrode active material and the binder evenly on a metal foil, which proves a current collector, to form a layer of the positive electrode active material. As the binder for the positive electrode mixture, any suitable known binder may be used. In addition, the positive electrode mixture may be admixed with known additives.

In the non-aqueous electrolyte cell 1 of the present invention, a lithium-transition metal compound oxide, represented by the general formula LiₓMnO₂ or LiₓMn_{1-y}Al_{y}O₂, where 0.94 ≤ x ≤ 0.96 and 0.06 ≤ y < 0.25, is used as the positive electrode active material.

The non-aqueous electrolytic solution is prepared by dissolving an electrolyte salt in a non-aqueous solvent.

The negative electrode 2 is accommodated in a negative electrode can 3, a positive electrode 4 is accommodated in a positive electrode can 5 and a separator 6 formed e.g., by a polypropylene porous film is placed between the negative electrode 2 and the positive electrode 4. The non-aqueous electrolytic solution is charged into the insides of the negative electrode can 3 and the positive electrode can 5 which are then caulked together and secured in position, with interposition of the insulating gasket 7, to complete the non-aqueous electrolyte cell 1.

In the foregoing description, the non-aqueous electrolyte cell 1 employing a non-aqueous electrolytic solution comprised of an electrolyte dissolved in a non-aqueous solvent is taken as an example. The present invention may, however, be applied to a cell employing the solid electrolyte comprised of an electrolyte dispersed in a matrix high polymer, or to a cell employing a gelated solid electrolyte containing a swelling solvent. The present invention may be applied both to a primary cell and to a secondary cell.

The cell of the present invention may be cylinder-, square-, coin- or a button-shaped, without any limitation as to the shape, while it may also be of a variety of sizes, such as thin type or a thick type.

### Examples

In the following, several experimental examples are given, in which the aforementioned cells were prepared and characteristics thereof were evaluated.

In the compound of the general formula LiₓMn_{1-y}Al_{y}O₂, used as a positive electrode active material in the present Example, there is an optimum value range for y of 0.06 ≤ y <0.25. However, the effect by changes in x is presumably equivalent for the above value range of y, so that y = 0.06 was used as a representative value of y. That is, in the compound represented by the formula of LiₓMn_{1-y}Al_{y}O₂= experiments were conducted using different values of x to find an optimum value range of x.

### Example 1

First, a positive electrode active material was prepared.

First, γ-MnO₂, as manganese starting material, Li₂O₃, as lithium starting material, and Al(OH)₃, as aluminum starting material, were weighed out to give a molar ratio Li:Mn:Al = 0.94:0.94:0.06. Using an agate mortar, the above starting materials were mixed thoroughly to give a powder mixture, in such a manner that no impurities will be mixed therein.

The resulting powder mixture was then compression-molded to a disc-shaped pellet 15 mm in diameter and 5 mm in thickness. This pellet was heated in air at a temperature rising rate of 10°C/min to 1000°C and maintained at this temperature. The time during which the pellet was heated to and kept at this temperature was set to 12 hours in order to allow lithium, manganese and aluminum to be reacted completely and turned into a single phase mixture.

The pellet, so fired, was cooled promptly in air to yield a powdered positive electrode active material.

A cell was then prepared, using a compound, obtained as discussed above, as a positive electrode active material.

80wt% of the positive electrode active material, 15 wt% of graphite, as an electrically conductive material, and 5 wt% of polyvinylidene fluoride, as a binder, were evenly mixed together to prepare a positive electrode mixture. As the above graphite, KS-15, manufactured by RONZA Inc., with a mean particle size of 5 to 20 µm, was used. As polyvinylidene fluoride, #1300 manufactured by ALDRICH Inc., was used.

This positive electrode mixture was coated on an aluminum mesh, as a current collector, and dried in a dry argon atmosphere at 100°C for one hour to form a layer of a positive electrode active material. The aluminum mesh, now carrying the layer of the positive electrode active material, was punched to a disc shape with a diameter of 15.5 mm, so as to be used as a pellet-shaped positive electrode. Meanwhile, 60 mg of an active material is carried by one positive electrode.

A metal lithium foil was punched to substantially the same shape as the positive electrode for use as a negative electrode.

LiPF₆ was dissolved at a concentration of 1 mol/l of a mixed solvent composed of an equal capacity mixture ofpropylene carbonate and dimethyl carbonate to prepare a non-aqueous electrolytic solution.

The positive electrode and the negative electrode, prepared as described above, was accommodated in a positive electrode can and in a negative electrode can, respectively, and a separator was placed between the positive and negative electrodes. A non-aqueous electrolytic solution was charged into the insides of the positive and negative cans, which cans were then caulked and secured together to form a 2025 type coin-shaped test cell. The above steps were all carried out in a dry atmosphere.

### Example 2

A non-aqueous electrolyte cell was prepared in the same way as in Example 1 except using γ-MnO₂, Li₂CO₃ and Al(OH)₃ at a molar ratio of Li:Mn:Al = 0.96:0.94:0.06.

### Example 3

A non-aqueous electrolyte cell was prepared in the same way as in Example 1 except using γ-MnO₂, Li₂CO₃ and Al(OH)₃ at a molar ratio of Li:Mn:Al = 0.96:0.94:0.06.

### Comparative Example 1

A non-aqueous electrolyte cell was prepared in the same way as in Example 1 except using γ-MnO₂, Li₂CO₃ and Al(OH)₃ at a molar ratio of Li:Mn:Al = 1.00:0.94:0.06.

### Comparative Example 2

A non-aqueous electrolyte cell was prepared in the same way as in Example 1 except using γ-MnO₂, Li₂CO₃ and Al(OH)₃ at a molar ratio of Li:Mn:Al = 0.98:0.94:0.06.

### Comparative Example 3

A non-aqueous electrolyte cell was prepared in the same way as in Example 1 except using γ-MnO₂, Li₂CO₃ and Al(OH)₃ at a molar ratio of Li:Mn:Al = 0.92:0.94:0.06.

### Comparative Example 4

A non-aqueous electrolyte cell was prepared in the same way as in Example 1 except using γ-MnO₂, Li₂CO₃ and Al(OH)₃ at a molar ratio of Li:Mn:Al = 0.90:0.94:0.06.

### Comparative Example 5

A non-aqueous electrolyte cell was prepared in the same way as in Example 1 except using γ-MnO₂, Li₂CO₃ and Al(OH)₃ at a molar ratio of Li:Mn:Al = 0.80:0.94:0.06.

A capacity evaluation test was then carried out on the cell prepared as described above.

As a capacity evaluation test, constant current charging was carried out for each cell, at a current density of 500 µA/cell, until the closed-circuit voltage reached 4.5±0.5 V in terms of a voltage with respect to lithium. The constant current discharging then was carried out at a current density of 500 µA/cell until the closed-circuit voltage reached 2.0 V in terms of a voltage with respect to lithium, for measuring the discharging capacity.

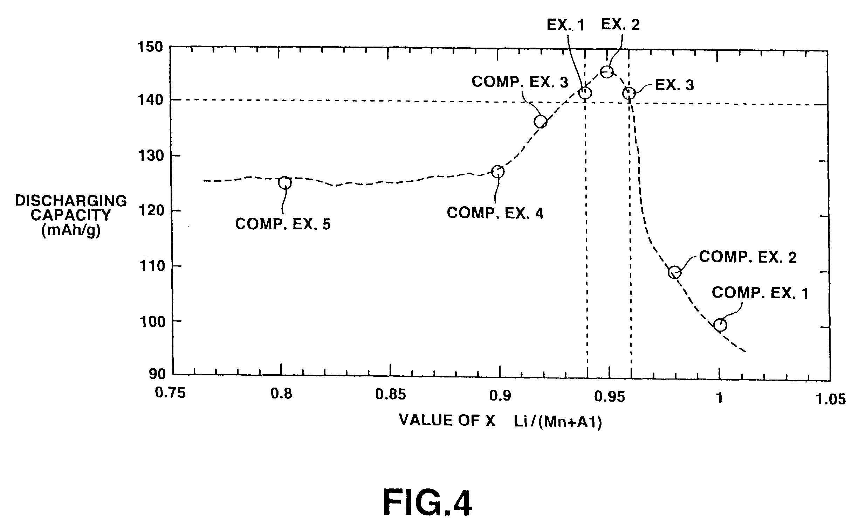

The relation between the value of x in LiₓMn_{1-y}Al_{y}O₂ used as the positive electrode active material and the discharging capacity is shown in Fig.4 for the cells of the Examples 1 to 6 and in the Comparative Examples 1 to 5.

It may be seen from Fig.4 that, in the cells of Examples 1 to 3, with x being in a range of 0.94 ≤ x ≤ 0.96, a high capacity exceeding 140 mAh/g is achieved, whereas, in the cells of the Comparative Examples 3 to 5, with x being less than 0.94, and in the cells of the Comparative Examples 1 and 2, with x exceeding 0.96, no sufficient capacity is achieved.

It has also been indicated that, with the value of x equal to 0.7, the same phenomenon as that with 0.70 < x < 1.00 occurs, insofar as the crystallographic structure is concerned, however, the discharging capacity becomes lower than with the discharging capacity x = 1.00, because of the larger content in the spinel structure having the theoretical capacity on the order of 140 mAh/g.

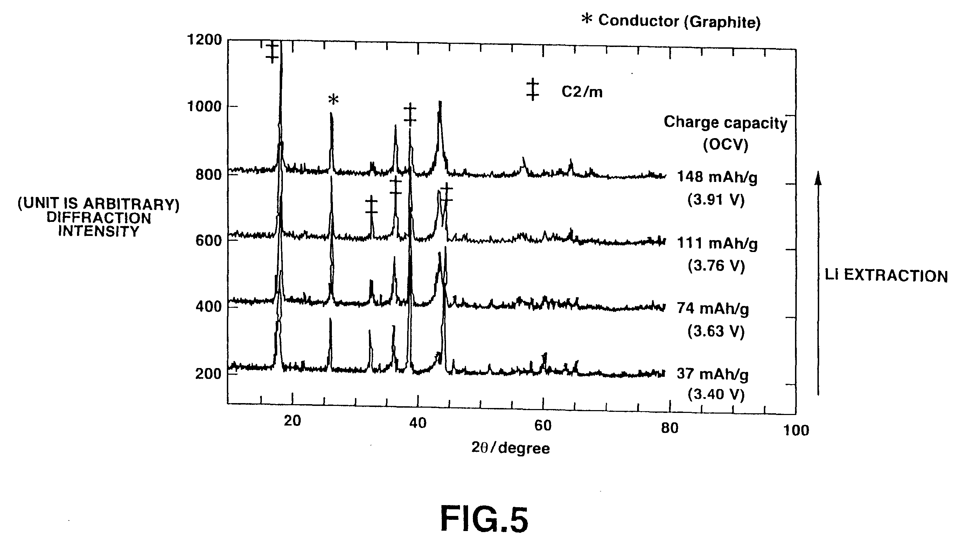

An X-ray diffraction chart on Li_{1.0}Mn_{0.94}Al_{0.06}O₂, prepared in the Comparative Example 1, is shown in Fig.5. It is seen from Fig.5 that, if the lithium content x is 1.0, the C2/m structure is collapsed with charging. Moreover, it has been confirmed that, if the lithium content x is set to 0.94 ≤ x ≤ 0.96, suppression of the collapsing in the structure, which might lead to the lowering in the cell capacity, may be achieved.

Thus it is seen that a high capacity may be achieved by using LiₓMn_{1-y}Al_{y}O₂, where x is such that 0.94 ≤ x ≤ 0.96, as the positive electrode active material. Although the limitation is made here to the capacity for the high current density of 500 µm/cm², similar results can be obtained for a higher current density.

Also, if LiₓMn_{1-y}Al_{y}O₂, containing no solid-dissolved Al, as the positive electrode active material, a high capacity exceeding 140 mAh/g may be realized by setting the range of x to 0.94 ≤ x ≤ 0.96.

## Claims

1. A non-aqueous electrolyte cell comprising:
a positive electrode containing a lithium-transition metal compound oxide as a positive electrode active material;
a negative electrode containing a carbon compound or metal lithium as a negative electrode active material; and
a non-aqueous electrolyte interposed between said positive and negative electrodes; wherein
said lithium-transition metal compound oxide is represented by the general formula LiₓMnO₂ or LiₓMn_{1-y}Al_{y}O₂ where 0.94 ≤ x ≤ 0.96 and 0.06 ≤ y ≤ 0.25.

2. The non-aqueous electrolyte cell according to claim 1 wherein the lithium-transition metal compound oxide, represented by the general formula LiₓMnO₂ or LiₓMn_{1-y}Al_{y}O₂, has a crystalline structure as represented by the spatial group C2/m.

3. The non-aqueous electrolyte cell according to claim 1 wherein said electrolyte is selected from the group consisting of LiClO₄, LiAsF₆, LiPF₆, LiBF₄, LiB(C₆H₅)₄, CH₃SO₃Li, CF₃SO₃Li, LiCl and LiBr.

4. The non-aqueous electrolyte cell according to claim 1 wherein said electrolyte is dissolved in a non-aqueous solvent and exists as a non-aqueous electrolyte.

5. The non-aqueous electrolyte cell according to claim 4 wherein said electrolyte is selected from the group consisting of propylene carbonate, ethylene carbonate, dimethyl carbonate, diethyl carbonate, 1,2-dimethoxyethane, 1,2-diethoxyethane, γ-butyrolactone, tetrahydrofuran, 2-methyl tetrahydrofuran, 1,3-dioxolane,4-methyl-1, 3-dioxolan, 4-methyl-1, 3-dioxolan, diethyl ether, sulforane, methyl supforane, acetonitrile, propionitrile, anisole, acetic acid ester, lactic acid ester and propionic acid ester.
